# FASCICULE DE BREVET EUROPEEN

(11) **EP 2 140 135 B1**
(45) Date de publication et mention de la délivrance du brevet: **02.05.2018**
(21) Numéro de dépôt: 08717869.5
(22) Date de dépôt: 14.03.2008
(51) Int. Cl.: F03B 13/26, F03D 9/00, F03B 13/10, F03B 17/06, F03D 9/28

(54) **DISPOSITIF ET PROCEDE POUR CAPTER UNE ENERGIE CINETIQUE D'UN FLUIDE NATURELLEMENT EN MOUVEMENT**
VORRICHTUNG UND VERFAHREN ZUR ENERGIEUMWANDLUNG AUS EINEM STRÖMENDEN FLUID
DEVICE AND METHOD FOR COLLECTING THE KINETIC ENERGY OF A NATURALLY MOVING FLUID

(30) Priorité: 14.03.2007 FR 0753820; 27.04.2007 FR 0754757
(43) Date de publication de la demande: 06.01.2010
(73) Titulaire: Guinard, Paul, 92210 Saint Cloud (FR)
(72) Inventeur: Guinard, Paul, 92210 Saint Cloud (FR)
(74) Mandataire: Regimbeau
(86) Numéro de dépôt international: PCT/EP2008/053130
(87) Numéro de publication internationale: WO 2008/113771

(56) Documents cités:
- EP-A- 1 489 299
- EP-A- 1 637 733
- EP-A- 1 741 926
- WO-A-03/029645
- DE-C- 812 660
- US-A- 3 794 456
- US-A- 4 383 182
- US-A- 4 868 408
- US-A1- 2007 048 086
- US-B1- 6 168 373

## Description

### DOMAINE TECHNIQUE

L'invention concerne le domaine de la récupération de l'énergie cinétique d'un courant de fluide naturellement en mouvement, tel que par exemple un courant marin ou atmosphérique (vent), et la conversion de cette énergie en énergie mécanique ou électrique.

### ETAT DE LA TECHNIQUE ET OBJECTIFS DE L'INVENTION

On connaît aujourd'hui plusieurs types de dispositifs permettant de capter une énergie cinétique d'un fluide pour la convertir en une énergie utilisable.

Parmi ces dispositifs, certains visent à récupérer l'énergie de mouvements de fluide que l'on ne peut assimiler à des « courants ». Ceci est le cas notamment des dispositifs visant à récupérer une énergie issue de la houle marine ou des vagues.

De tels dispositifs de récupération de l'énergie de la houle ou des vagues utilisent ainsi typiquement des moyens de récupération de l'énergie aptes à être entraînés par la houle ou les vagues dans un mouvement de va-et-vient tels que par exemple des soufflets ou des poids.

Le document US 4,883,411 décrit un système de récupération de l'énergie des vagues comprenant deux appareils de pompage immergés, chaque moyen de pompage comprenant un flotteur mis en mouvement par l'action des vagues et une pompe à piston. Chaque pompe à piston est apte à prélever de l'eau de mer et à l'envoyer vers un réservoir disposé au-dessus du niveau de la mer. Le fluide stocké peut être utilisé pour faire fonctionner un générateur hydroélectrique.

Les dispositifs selon l'invention relèvent quant à eux d'une conception et d'un fonctionnement général différents.

Les dispositifs selon l'invention visent en effet à récupérer l'énergie d'un courant, dont les possibles variations (en direction et/ou en vitesse) se font selon des temps de variation bien supérieurs aux temps typiques de variation de la houle. Les courants (par exemple atmosphériques ou marins) évoluent en effet généralement continûment et relativement lentement.

Dans certains cas il est en outre possible de prévoir la force et la direction de ces courants, ce qui n'est quasiment pas le cas pour la houle ou les vagues.

On précise à cet égard qu'une application particulièrement avantageuse de l'invention consiste à récupérer l'énergie de courants de marée, dont la période, la direction et la force sont tout à fait prévisibles - ce qui est un facteur important pour garantir une récupération efficace et économiquement rentable de l'énergie.

Concernant donc les dispositifs de récupération de l'énergie d'un courant, on connaît des éoliennes qui permettent de transformer l'énergie cinétique du vent en énergie mécanique. L'énergie mécanique générée peut être directement utilisée ou être convertie en une énergie de nature différente (chaleur, électricité).

De même, on connaît des machines hydroélectriques (parfois appelées « hydroliennes » ou « éoliennes sous-marines ») capables de transformer l'énergie cinétique d'un courant marin en une énergie mécanique, ou électrique.

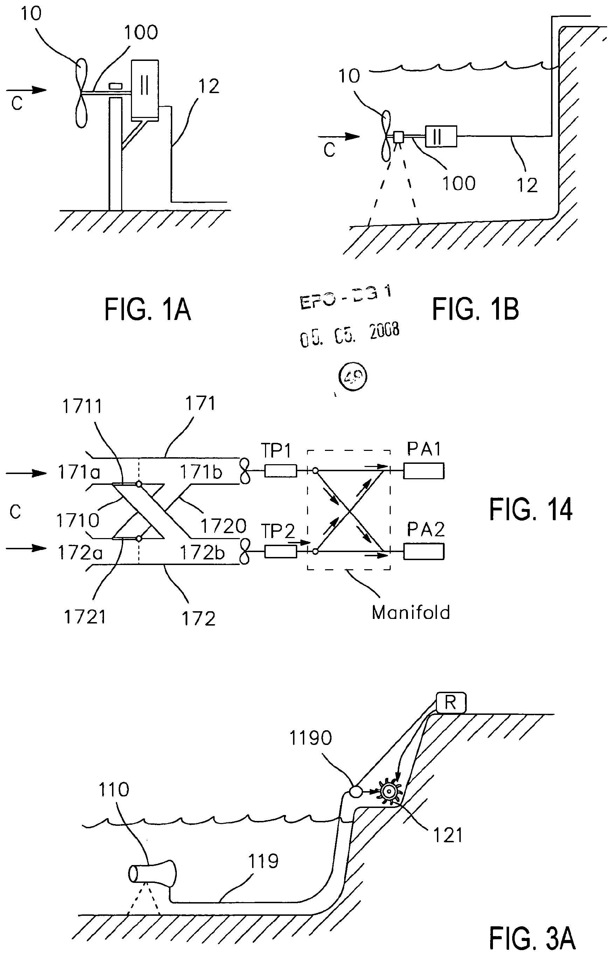

De tels dispositifs connus sont représentés schématiquement sur les figures 1A et 1B.

Ces dispositifs connus comprennent des premiers moyens de conversion de l'énergie, typiquement une hélice 10 ou un autre élément de rotor, solidaire d'un arbre tournant 100 ou d'un autre élément mobile, pour récupérer l'énergie du courant et la convertir en mouvement mécanique dudit élément mobile. Dans ce texte on appellera aussi « moyens de récupération » de tels « premiers » moyens de conversion.

Ces dispositifs connus comprennent aussi des moyens 11 de conversion de l'énergie mécanique ainsi récupérée, pour convertir cette énergie (typiquement en une énergie électrique). On appellera dans ce texte de tels moyens « deuxièmes » moyens de conversion. Les moyens 11 comprennent typiquement un alternateur dont le rotor est entraîné par l'arbre de sortie 100 de l'hélice 10.

Ils comprennent également des moyens 12 pour acheminer l'électricité produite par l'alternateur en un site de stockage ou de consommation de cette électricité.

Dans le cas des dispositifs connus, les deuxièmes moyens de conversion sont généralement directement couplés aux premiers moyens de conversion. Ceci est le cas par exemple pour une éolienne dont l'hélice (premier moyen de conversion) est directement couplée avec un alternateur (second moyen de conversion).

Par « directement couplé » on entend ici que le mouvement des moyens de récupération est utilisé (éventuellement via une chaîne cinématique comprenant par exemple des moyens d'embrayage ou de démultiplication) sans conversion d'énergie pour mettre en mouvement les deuxièmes moyens de conversion qui a leur tour produisent une énergie électrique sur place.

Les premiers et deuxièmes moyens de conversion, directement couplés, sont alors disposés proches l'un de l'autre pour assurer ce couplage.

Or ceci peut constituer un inconvénient notamment pour l'installation du dispositif, son exploitation et sa maintenance.

En particulier, dans le cas d'un dispositif destiné à être implanté dans un lieu difficile d'accès, l'installation de deuxièmes moyens de conversion tels qu'un alternateur électrique peut s'avérer délicate - notamment en milieu humide et a fortiori dans un lieu immergé, en particulier si une électronique de puissance s'avère nécessaire.

L'exploitation de tels deuxièmes moyens de conversion et leur maintenance, toujours sur site difficile d'accès, peuvent également être très contraignants.

Même si cet inconvénient n'est pas nécessairement rédhibitoire, il serait préférable de pouvoir s'en affranchir.

En outre, le transport de l'électricité produite in situ vers un lieu de consommation ou de stockage peut également représenter une contrainte - ici encore notamment dans le cas d'une production sur des sites isolés et/ou humides voire immergés.

Le document US 4,317,048 décrit un système comprenant une pluralité de « premiers » dispositifs de conversion, chaque dispositif de conversion étant apte à capter une énergie émise par une source d'énergie naturelle (énergie solaire, énergie du vent, courants d'eau, etc.) pour mettre un fluide sous pression. Le fluide sous pression est ensuite transporté et sa pression est utilisée pour faire fonctionner des moteurs hydrauliques couplés à des génératrices électriques.

Un tel système permet de transporter l'énergie récupérée en milieu naturel par l'intermédiaire d'un circuit fluidique fermé, sans devoir produire de l'électricité sur place et en subir les inconvénients mentionnés ci-dessus.

Mais ce système nécessite l'installation d'un circuit fluidique fermé comprenant d'une part un conduit d'alimentation pour alimenter les premiers dispositifs de conversion en fluide et d'autre part un conduit de collecte pour collecter le fluide sous pression produit par chaque dispositif de conversion et transporter ce fluide vers les moteurs hydrauliques.

Un tel système exige ainsi une construction complexe avec son circuit fluidique fermé. Il nécessite l'apport d'un fluide de transport d'énergie.

En outre, en cas de défaillance du dispositif, le fluide de transport d'énergie est susceptible de polluer l'environnement.

Un objectif de l'invention consiste à permettre de s'affranchir des inconvénients et contraintes mentionnés ci-dessus.

Le document WO 03/029645 A1 décrit un système de génération de puissance électrique comprenant une pluralité d'unités de turbine immergées dans la mer, chaque unité incluant une turbin et une pompe couplée à la turbine. Le dispositif comprend également des moyens générateurs distants et un conduit pour transporter du fluide depuis chaque unité de turbine jusqu'aux moyens générateurs. Le fluide transporté est de l'eau de mer prélevée par la pompe. Les unités de turbine sont fixées au fond de la mer et sont entrainées par le flux et le reflux de la marée, de sorte qu'elles ne nécessitent pas d'être orientées dans la direction de mouvement de l'eau.

Le document US 4,383,182 décrit un système de génération de puissance électrique destiné à être disposé dans un courant marin de vitesse sensiblement constante. Le système comprend une pluralité de modules de production de puissance incluant une hélice et une pompe centrifuge, ainsi qu'un module d'absorption de puissance incluant une pompe centrifuge ou turbine et un générateur électrique. Ce document précise qu'un nombre quelconque de modules de production de puissance peut être utilisé pour alimenter un réservoir haute pression dans le module d'absorption de manière à accroître la quantité d'électricité générée par le générateur. Dans ce système, l'électricité est produite sur place, dans le système immergé, et non pas par des moyens distants.

Le document EP 1 489 299 A1 décrit un système de récupération de l'énergie du vent, comprenant un rotor éolien et un compresseur d'air apte à être entrainé par le rotor et à produire de l'air liquide. Un conduit permet d'acheminer l'air liquide depuis le compresseur vers des réservoirs de stockage ou vers une station de désalinisation d'eau de mer.

Le document GB 2 340 892 A décrit un système comprenant des « propulseurs » immergés dans l'eau de mer, chaque propulseur incluant un rotor et une pompe à eau entrainée par le rotor. Un conduit haute pression permet d'acheminer de l'eau sous pression depuis les propulseurs vers une station réceptrice distante. La station réceptrice inclut une turbine à eau permettant la génération d'électricité. Chaque propulseur est apte à s'orienter naturellement dans la direction du courant.

Le document EP 1 637 733 A1 décrit un système pour produire de l'énergie électrique à partir du vent. Le système comprend une pluralité d'éoliennes, chaque éolienne incluant un rotor et une pompe entrainée par le rotor. La pompe est apte à recevoir du fluide (en particulier de l'eau) via un conduit d'alimentation et à injecter du fluide sous pression dans un conduit de collecte pour acheminer le fluide vers un réservoir sous pression. Le fluide sous pression est utilisé pour faire fonctionner un générateur de puissance électrique.

Ce système nécessite l'installation d'un circuit fluidique fermé comprenant d'une part un conduit d'alimentation et d'autre part un conduit de collecte pour collecter le fluide sous pression produit par chaque éolienne et transporter ce fluide vers le réservoir.

Le document DE 10 2004 063895 A1 décrit un système de récupération de l'énergie du vent. Le système comprend une installation offshore incluant un compresseur monté sur un mât. Le compresseur entrainé par le vent est apte à transmettre de l'air sous pression vers un générateur électrique distant situé à terre.

Dans les systèmes connus de récupération d'énergie d'un courant, le courant exerce sur les moyens de récupération une poussée mécanique qui peut être importante.

Les moyens de récupération sont toujours intégrés sur leur site d'installation à un ensemble qui comprend d'autres moyens - par exemple des deuxièmes moyens de conversion d'énergie.

Cet ensemble se trouve soumis à la poussée du courant.

Il est donc nécessaire de dimensionner en conséquence de forts moyens d'ancrage et de maintien de l'ensemble installé sur site. Ceci peut s'avérer contraignant.

En outre, il peut être désiré de soustraire à la poussée du courant les moyens (de conversion ou autre) qui sont couplés aux moyens de récupération. Ceci est le cas par exemple d'un alternateur couplé à une hélice - on désire alors isoler l'alternateur de la poussée appliquée par le courant sur l'hélice afin que l'alternateur puisse tourner indépendamment de la poussée subie par l'hélice.

Dans ce cas il est nécessaire de prévoir dans le dispositif des systèmes de maintien, de paliers et de butées destinés à isoler autant que faire se peut les moyens couplés aux moyens de récupération, selon la direction de poussée du courant.

La mise en oeuvre de tels systèmes peut devenir complexe. Dans le cas où la poussée est très importante (cas d'une éolienne sous marine de grandes dimensions par exemple) la conception, l'installation et la mise en place de tels systèmes de paliers et de butées peuvent devenir très contraignants.

Un autre objectif de l'invention consiste ainsi à pouvoir s'affranchir de systèmes de paliers et de butées de dimensions importantes.

Un autre aspect encore à prendre en compte concerne la régularité de l'approvisionnement en énergie fournie par les dispositifs de récupération d'énergie.

La récupération de l'énergie naturelle est en effet soumise à la disponibilité de cette énergie.

Dans certains cas (cas des courants de marée notamment), cette disponibilité est prévisible. Mais même alors l'apport d'énergie demeure irrégulier car il varie avec l'intensité du courant.

Dans le cas des courants de marée qui correspondent probablement aux courants naturels les plus prévisibles, il demeure en effet des périodes pendant lesquelles le flux du courant ne sera pas suffisant pour fournir une énergie significative (période autour de l'étal, périodes de mortes-eaux).

Et pendant d'autres périodes (plus fort du courant de vives-eaux par exemple) il est également possible que le flux du courant soit trop fort pour les besoins ou les capacités prévues.

En effet en pratique les dispositifs que l'on peut envisager d'exploiter sont conçus pour récupérer l'énergie autour de régimes de fonctionnement nominaux, centrés sur les conditions de courant les plus fréquentes. Hors de ces conditions la récupération d'énergie est impossible ou tout au moins problématique.

Il serait désirable de s'affranchir également de cette contrainte d'irrégularité de la disponibilité de l'énergie, au moins dans une certaine mesure.

Enfin, dans le cas où on désire produire une énergie électrique il serait désirable de pouvoir produire directement une électricité de caractéristiques données (par exemple un courant électrique alternatif de 50 Hertz), sans intervention d'une électronique de puissance.

### RESUME DE L'INVENTION

L'invention vise à répondre aux objectifs énoncés ci-dessus.

Plus précisément, dans les différentes formes de réalisation de l'invention qui vont être exposées ci-après certains de ces objectifs seront visés. Il est ainsi entendu qu'une forme donnée de réalisation ne vise pas nécessairement à atteindre simultanément tous ces objectifs. Mais comme on va le voir chaque objectif est adressé par des moyens propres à certaines formes de réalisation de l'invention.

A cet égard, l'invention propose un dispositif pour capter une énergie cinétique d'un fluide naturellement en mouvement, comprenant :
- des premiers moyens de conversion aptes à convertir le mouvement du fluide en un mouvement d'entraînement pour entraîner des moyens de pompage ou de compression,
- des moyens de pompage ou de compression entraînés par les premiers moyens de conversion, les moyens de pompages étant aptes à prélever du fluide du courant et à le mettre en circulation pour le transporter vers des moyens distants de stockage ou de conversion d'énergie,
caractérisé en ce que les moyens de pompage ou de compression comprennent une pompe centrifuge multicellulaire dont l'axe de rotation est parallèle ou sensiblement parallèle à la direction du courant.

Du fait que le fluide mis en circulation est également le fluide dont l'énergie cinétique est captée, ce dispositif ne nécessite pas l'apport d'un fluide de transport spécifique.

En cas de défaillance du dispositif, les risques de pollution de l'environnement par le fluide transportés sont donc limités.

En outre, ce dispositif ne requiert pas l'installation d'un circuit hydraulique fermé.

Grâce à la pompe centrifuge multicellulaire, les moyens de pompage/ compression exercent sur les moyens de conversion une force qui s'oppose à la poussée nécessairement générée par les moyens de conversion. Ainsi, les forces exercées par les moyens de pompage/compression d'une part et les moyens de conversion d'autre part peuvent s'équilibrer partiellement ou en totalité. Cela évite l'utilisation de moyens de retenue mécaniques pour retenir les moyens de conversion par rapport aux moyens de pompage/compression, tels que des paliers ou des butées de dimensions importantes.

Le dispositif pourra en outre présenter les caractéristiques suivantes :
- le fluide naturellement en mouvement présente une masse importante et une faible pression et le fluide mis en circulation présente une faible masse et une pression importante,
- le dispositif comprend des moyens pour accélérer une vitesse du fluide en mouvement,
- les moyens de conversion comprennent une hélice apte à convertir le mouvement du fluide en un mouvement de rotation,
- le dispositif comprend des moyens de transmission interposés entre les moyens de conversion et les moyens de pompage ou de compression, les moyens de transmission étant aptes à multiplier une vitesse du mouvement d'entraînement généré par les moyens de conversion,
- le dispositif comprend des moyens pour transporter le fluide en circulation vers les moyens distants de stockage ou de conversion,
- le dispositif comprend des moyens distants de conversion incluant une turbine apte à être entraînée en rotation par le fluide en circulation et un alternateur apte à convertir la rotation de la turbine en une énergie électrique,
- le dispositif comprend des moyens distants de stockage incluant un réservoir de fluide disposé en hauteur par rapport à des moyens de conversion,
- le dispositif comprend des moyens distants de stockage incluant un réservoir de fluide sous pression,
- le dispositif comprend des moyens pour orienter les moyens de conversion en fonction d'une direction du mouvement du fluide,
- le dispositif comprend des moyens pour maintenir un sens constant du mouvement d'entraînement lors d'une inversion d'un sens du mouvement du fluide,
- le dispositif comprend des moyens de réglage pour ajuster le mouvement d'entraînement généré par les moyens de conversion en fonction d'une vitesse du fluide,
- les moyens de réglage comprennent des moyens d'orientation des pales d'une hélice et des moyens de stockage d'énergie, par exemple de stockage de fluide, pour alimenter les moyens d'orientation en énergie,
- le dispositif comprend une pluralité de moyens de conversion,
- le dispositif comprend au moins une paire de moyens de conversion, chaque moyen de conversion d'une paire, étant apte à convertir le mouvement du fluide en un mouvement d'entraînement en sens opposé de celui de l'autre moyen de conversion de la paire,
- le dispositif comprend un carter profilé pour que le dispositif s'oriente de lui-même en fonction d'une direction du mouvement du fluide,
- le dispositif comprend des moyens de fixation, notamment des moyens d'ancrage pour maintenir le dispositif selon une orientation fixe,
- le dispositif comprend d'une part une pluralité de moyens de conversion et de pompage ou de compression associés répartis en différents sites géographiques, et d'autre part des moyens distants de conversion incluant une turbine apte à être entraînée en rotation par du fluide en circulation en provenance des différents moyens de pompage ou de compression et un alternateur apte à convertir la rotation de la turbine en une énergie électrique,
- le dispositif comprend en outre un manifold apte à sélectivement connecter ou déconnecter chacun des moyens de conversion et de pompage ou de compression avec les moyens distants de conversion pour réguler la quantité de fluide reçue par les moyens distants de conversion,
- le dispositif comprend des moyens d'aération des moyens de pompage ou de compression,
- les premiers moyens de conversion comprennent une hélice et le dispositif comprend des moyens distants de conversion incluant une turbine génératrice apte à être entraînée en rotation par le fluide en circulation et un alternateur apte à convertir la rotation de la turbine en une énergie électrique, ainsi que d'une part des moyens de réglage de l'orientation des pales de l'hélice entrainant les moyens de pompage, et d'autre part, des moyens de réglage du pointeau d'une buse d'alimentation de la turbine génératrice ou des moyens de réglage de l'orientation des pales de la turbine génératrice, les moyens de réglage étant commandés pour réguler un débit et une pression du fluide alimentant la turbine génératrice de manière à ce que l'alternateur génère un courant électrique de fréquence quasi-constante.

L'invention se rapporte également à un procédé pour capter une énergie cinétique d'un fluide naturellement en mouvement, comprenant des étapes consistant à :
- convertir le mouvement du fluide en un mouvement d'entraînement pour entraîner des moyens de pompage ou de compression,
- entraîner des moyens de pompage ou de compression pour prélever dudit fluide et le mettre en circulation pour le transporter vers des moyens distants de stockage ou de conversion,
dans lequel les moyens de pompage ou de compression comprennent une pompe centrifuge multicellulaire dont l'axe de rotation est parallèle ou sensiblement parallèle à la direction du courant.

### BREVE DESCRIPTION DES DESSINS

D'autres caractéristiques et avantages ressortiront encore de la description qui suit. Cette description est purement illustrative et doit être lue en regard des dessins annexés, parmi lesquels, outre les figures 1A et 1B qui ont déjà été commentées :

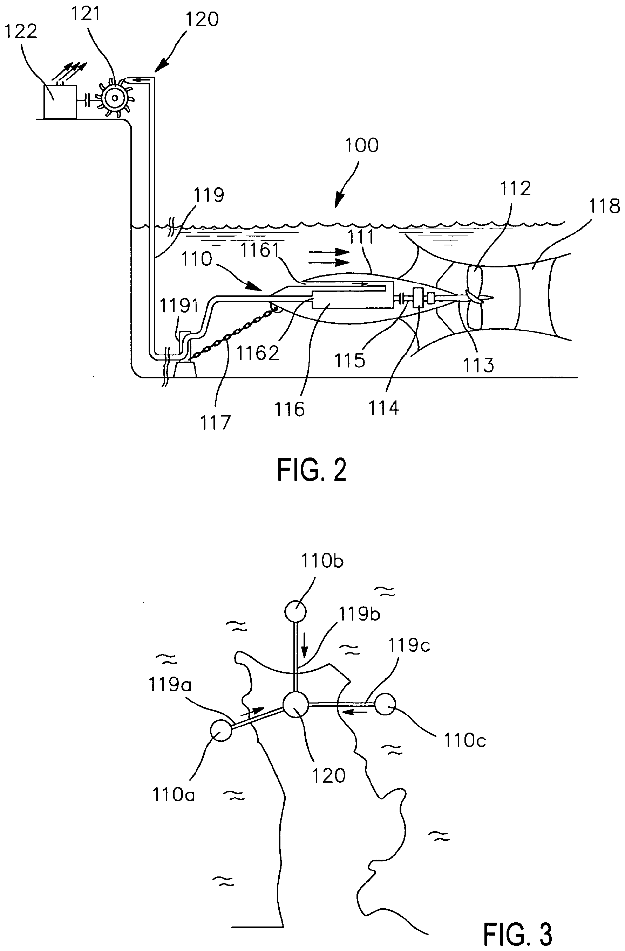

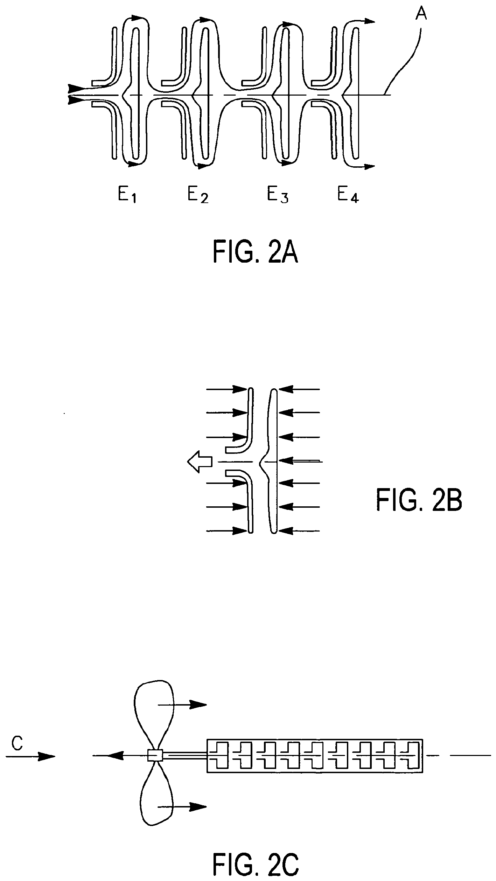

- la figure 2 représente de manière schématique un dispositif pour capter une énergie cinétique d'un courant marin, conforme à un premier mode de réalisation de l'invention,
- les figures 2A à 2C représentent schématiquement :
   o une partie interne d'une pompe centrifuge multicellulaire pouvant être mise en oeuvre dans un dispositif selon l'invention,
   o un détail d'une de ces parties avec une représentation schématique de répartition des forces,
   o l'effet pouvant être obtenu pour la résultante des forces s'appliquant sur un sous-ensemble d'un dispositif selon l'invention,
- la figure 3 représente de manière schématique le dispositif de la figure 2 dans une configuration comprenant plusieurs appareils de conversion répartis en différents sites géographiques,
- la figure 3a représente schématiquement une configuration de mise en oeuvre de l'invention dans laquelle on peut sélectivement acheminer du fluide sous pression vers des moyens de conversion de l'énergie, ou des moyens de stockage de l'énergie,
- la figure 4 représente de manière schématique un dispositif pour capter une énergie cinétique d'un vent, conforme à un deuxième mode de réalisation de l'invention,
- la figure 5 représente de manière schématique une variante du dispositif de la figure 4,
- les figures 6 et 7 représentent de manière schématique un exemple d'appareil pour capter une énergie cinétique d'un vent, tel qu'il peut être utilisé dans le mode de réalisation des figures 4 et 5,
- les figures 8A et 8B représentent de manière schématique un exemple d'appareil destiné à être immergé pour capter une énergie d'un courant marin, tel qu'il peut être utilisé dans le mode de réalisation de la figure 2,
- la figure 9 représente de manière schématique une variante du dispositif de la figure 2,
- les figures 10A à 10D représentent de manière schématique, en vue de dessus, en vue en coupe, en vue de côté et en vue de derrière, un appareil destiné à être immergé pour capter une énergie d'un courant marin, tel qu'il peut être utilisé dans le mode de réalisation de la figure 2,
- les figures 11A à 11D représentent de manière schématique, en vue de dessus, en vue en coupe, en vue de côté et en vue de derrière, un appareil de maintenance accouplé à un appareil pour capter une énergie d'un courant marin conforme aux figures 10A à 10D,

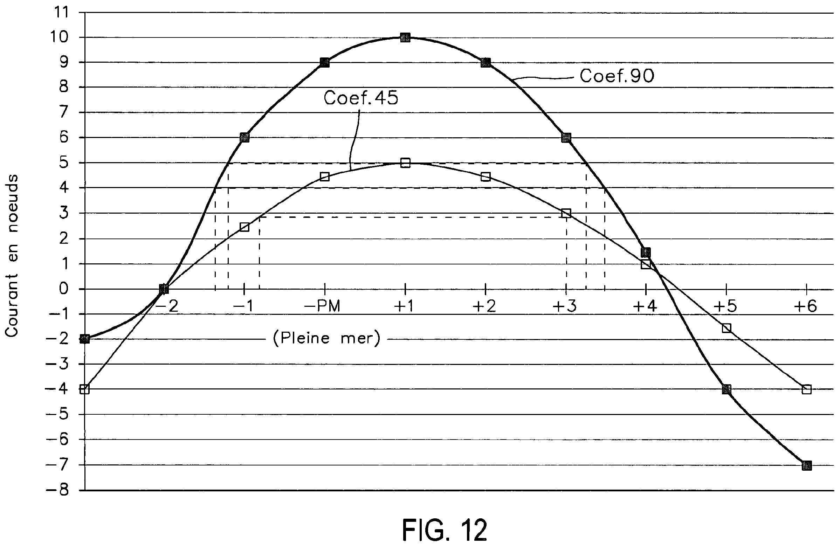

- la figure 12 est un diagramme représentant de manière schématique les variations de la vitesse d'un courant en fonction de l'heure, permettant d'estimer une puissance théorique en sortie du dispositif,

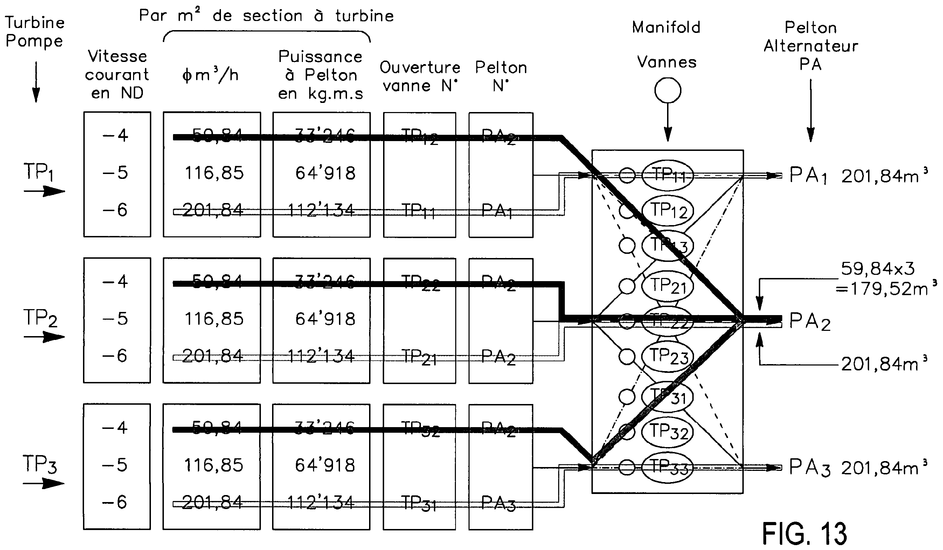

- la figure 13 représente de manière schématique un diagramme de connexion de plusieurs appareils dans un dispositif pour capter une énergie cinétique d'un courant marin,
- la figure 14 représente schématiquement un arrangement qui peut être prévu pour diriger sélectivement vers un ou plusieurs moyens de récupération désirés (ici TP1, TP2) le flux d'un courant, en fonction de sa puissance instantanée, et exploiter en aval de ce ou ces moyens de récupération (ici PA1, PA2) l'énergie récupérée dans un ou plusieurs moyens de stockage ou de conversion d'énergie.

### DESCRIPTION DETAILLEE DE MODES DE REALISATION PREFERES

De manière générale, l'invention propose ainsi un dispositif pour capter une énergie cinétique d'un courant de fluide, comprenant :
- des premiers moyens de conversion (aussi appelés dans ce texte moyens de récupération, ou encore « sources ») aptes à convertir le mouvement du fluide en un mouvement d'entraînement pour entraîner des moyens de pompage ou de compression,
- des moyens de pompage ou de compression (que dans la suite de ce texte on appellera simplement « moyens de pompage ») entraînés par les premiers moyens de conversion, les moyens de pompages étant aptes à prélever du fluide du courant et à le mettre en circulation pour le transporter vers des moyens distants de stockage ou de conversion d'énergie.

Les moyens de récupération comprennent typiquement une hélice ou un autre élément tournant. En tout état de cause ils comprennent un élément mobile pour récupérer de l'énergie du courant de fluide et pour entraîner les moyens de pompage.

Les moyens de pompage, entraînés par les moyens de récupération, pompent du fluide dans le milieu ambiant et le mettent sous pression pour permettre son transport vers des moyens, distants, de stockage ou de conversion d'énergie. Ce fluide mis sous pression permet ainsi de transporter l'énergie récupérée dans le courant.

Le fait que le fluide soit le fluide naturel du courant permet d'éviter le recours à un circuit fluidique fermé complexe. Cela permet également d'éviter les autres inconvénients associés à un tel circuit fermé (risque de pollution, difficulté de maintenance, ..).

Plusieurs modes de réalisation de l'invention vont être décrits. Ces modes ne sont pas limitatifs. Les différents exemples qui vont être illustrés comprennent chacun des aspects particuliers. Ces aspects particuliers ne sont pas attachés uniquement au mode de réalisation qu'ils illustrent dans ce texte - ils peuvent être mis en oeuvre avec tout mode de réalisation de l'invention et ces aspects particuliers peuvent ainsi être combinés entre eux selon toute combinaison possible.

En outre, les éléments qui sont exposés à propos d'un système éolien peuvent être applicables - sauf incompatibilité - aux systèmes sous-marins. L'inverse est également vrai.

### Description d'un premier mode de réalisation

La figure 2 illustre un exemple de réalisation de l'invention.

Sur cette figure, le dispositif 100 représenté comprend une première partie 110 immergée dans la mer et une deuxième partie 120 au sol, installée par exemple sur une côté, à distance de la partie immergée 110.

La première partie 110 du dispositif est un appareil comprenant un carter 111, une hélice 112 montée rotative par rapport au carter 111, un premier arbre de transmission 113 apte à être entraîné en rotation par l'hélice 112, un mécanisme multiplicateur 114, un deuxième arbre de transmission 115, une pompe centrifuge multicellulaire 116 apte à être entraînée par le deuxième arbre 115.

Dans ce mode de réalisation comme dans tous les modes de réalisation de l'invention, le mécanisme multiplicateur est optionnel.

Quand ce mécanisme multiplicateur est présent il permet d'entraîner l'arbre de transmission en prise avec les moyens de pompage (qui sont ici la pompe centrifuge multicellulaire) avec une vitesse de rotation élevée.

Quand ce mécanisme est absent la conception et l'entretien du système sont simplifiés.

Le carter 111 est arrimé au fond de la mer par l'intermédiaire d'une chaîne d'arrimage 117 ou sur un pieu ou un support lui-même mouillé ou fixé au sol.

Par ailleurs, le dispositif comprend un système venturi 118 pour accélérer la vitesse du courant marin qui anime l'hélice 112.

L'hélice 112 est située à l'extérieur du carter 111. Il s'agit par exemple d'une hélice de type Kaplan.

Le mécanisme multiplicateur 114, le deuxième arbre de transmission 115 et la pompe centrifuge multicellulaire 116, sont agencés à l'intérieur du carter 111.

La pompe est avantageusement réalisée sous forme d'une pompe multicellulaire dont chaque étage (« cellule ») augmente la pression de fluide. On donnera des détails pouvant concerner une telle pompe dans une autre section de ce texte.

La pompe centrifuge 116 présente une entrée de fluide 1161 et une sortie de fluide 1162.

Le dispositif comprend un conduit de fluide 119 pour transporter du fluide de la sortie 1162 de la pompe 116 vers la partie 120 au sol du dispositif.

Dans ce mode de réalisation le conduit de fluide 119 est pourvu d'un joint tournant 1191 qui permet à la partie immergée 110 du dispositif de s'orienter, sans endommager le conduit 119.

Le joint tournant est ici représenté proche de la côte, qui est en réalité à distance. En pratique la partie immergée 110 du dispositif s'oriente en fonction des sollicitations du courant, en pivotant autour du joint tournant 1191 qui demeure fixe.

La deuxième partie 120 du dispositif comprend une turbine hydraulique 121, de type Pelton ou Francis par exemple, et un générateur d'électricité 122, tel qu'un alternateur, couplé à la turbine 121.

En fonctionnement, la partie immergée 110 du dispositif est maintenue à une profondeur sensiblement constante.

Du fait de la prise au courant qu'il offre, le carter 111 est apte à « éviter », c'est à dire à s'orienter de lui-même dans la direction du courant marin en tournant autour de son point d'ancrage 1191 au fond, de sorte que la sollicitation de l'hélice 112 par le courant marin soit toujours maximale. L'ensemble 110 forme un tout rigide et évite donc avec le carter.

L'eau de mer en circulation dans le venturi 118, entraîne l'hélice 112 en rotation.

Le mouvement de rotation de l'hélice 112 est transmis par le biais du premier arbre d'entraînement 113, du mécanisme multiplicateur 114 et du deuxième arbre d'entraînement 115 à la pompe 116. Le mécanisme multiplicateur 114 (qui est comme on l'a dit optionnel) permet de convertir le mouvement de rotation du premier arbre 113 en un mouvement de rotation du deuxième arbre 115 présentant une vitesse de rotation supérieure.

Typiquement, le mécanisme multiplicateur 114 est apte à convertir une vitesse de rotation du premier arbre 113 comprise entre 100 et 600 tours par minute en une vitesse de rotation du deuxième arbre 115 comprise entre 3000 et 6000 tours par minute.

Le deuxième arbre d'entraînement 115 entraîne la pompe 116. La pompe 116 prélève de l'eau de mer par l'entrée 1161 et injecte l'eau de mer dans le conduit 119 par la sortie 1162. L'eau de mer est injectée par la pompe 116 à une pression élevée, de l'ordre de 200 bars. L'eau de mer est directement prélevée dans le milieu environnant.

La pompe 116 met en circulation l'eau de mer sous pression dans le conduit 119. L'eau de mer est transportée par le conduit 119 jusqu'à la partie au sol 120 du dispositif.

L'eau de mer ainsi transportée est utilisée pour alimenter la turbine 121. La turbine 121 est entraînée en rotation par l'eau de mer sous pression. La turbine 121 entraîne à son tour le générateur 122 qui convertit le mouvement de rotation de la turbine 121 en un courant électrique. Le mouvement de la turbine 121 à vitesse régulée stable permet de fournir directement un courant électrique de fréquence stable.

L'eau ainsi utilisée peut retourner à la mer.

L'hélice 112 est actionnée par le courant marin, caractérisé par une grande masse d'eau à faible pression, et la pompe 116 injecte un liquide de transport sous la forme d'une petite masse d'eau à forte pression.

### Lissage des irrégularités de courant

Les courants naturels (marins ou aériens) sont susceptibles de variations qui peuvent s'avérer problématiques pour une bonne exploitation de leur énergie.

Généralement la vitesse du courant marin varie continuellement, ce qui entraîne une variation de l'énergie cinétique qui peut être captée par l'hélice 112.

### ∘ Lissage des irrégularités par réglage du débit d'admission

On peut prévoir des moyens de réglage du débit d'admission de l'hélice 112 ou de la turbine 121, ou encore des moyens de réglage de l'orientation des pales des l'hélice 112, de manière à réguler la vitesse de rotation de l'hélice et/ou de la turbine 121 et obtenir une vitesse de rotation de l'arbre 115 sensiblement constante.

On peut ainsi obtenir un courant électrique de période sensiblement constante.

### ∘ Lissage des irrégularités par utilisation de plusieurs « sources » 110

En outre, comme cela est illustré sur la figure 3, le dispositif 100 peut comprendre plusieurs appareils 110a, 110b, 110c immergés permettant d'alimenter en parallèle une même turbine hydraulique installée dans une partie au sol 120, via des conduits respectifs 119a, 119b, 119c.

Dans ce cas les arrivées des différents conduits 119 issus de chaque appareil 110 convergent au niveau d'un concentrateur ou manifold (les deux termes étant compris comme équivalents dans ce texte).

Dans le cas d'un manifold muni de moyens d'admission permettant de régler sélectivement l'ouverture de chaque conduit 119, il est possible de gérer ainsi l'admission de fluide sous pression en provenance des différents appareils 110. Ces différentes admissions de fluide se combinent au niveau de manifold en un flux unique, qui alimente la turbine située en 120.

Dans le cas d'un courant marin dont on connaît à l'avance les caractéristiques (cas des courants de marée) il est possible de programmer à l'avance ces ouvertures pour obtenir un flux d'alimentation de turbine de caractéristiques désirées, par exemple à l'intérieur d'une plage de fonctionnement désirée de la turbine ;

Les appareils 110 peuvent être disposés dans des sites géographiques distincts, chaque site présentant à un moment donné des caractéristiques de courant différentes. Dans une telle configuration, les différents débits d'eau de mer générés par les différents appareils 110 se combinent selon des proportions qui peuvent être contrôlées au niveau du manifold, ce qui permet de lisser le débit global d'eau de mer alimentant la turbine 121.

Et dans le cas de l'implantation de plusieurs appareils 110 en des sites dont on connaît à l'avance les courants (par exemple des sites dans lesquels les courants sont des courants de marée) il est possible de prévoir à l'avance l'énergie qui sera acheminée vers la turbine 121, en maintenant cette énergie dans des plages désirées par l'addition contrôlée de tout ou partie des énergies issues des conduits 119.

Dans ce mode de réalisation comme dans tous les autres, il est d'ailleurs possible de prévoir un moyen pour orienter sélectivement le fluide sous pression du conduit 119 vers la turbine (moyen de conversion d'énergie) ou vers un moyen de stockage d'énergie (par exemple un réservoir situé en hauteur).

Enfin, plusieurs turbines hydrauliques 121 peuvent être prévues en aval du manifold. Cet aspect sera développé en référence notamment à la figure 14 qui illustre un exemple de manifold

### Moyens de « conversion ou de stockage » d'énergie

On désigne par « moyens de conversion ou de stockage d'énergie » les moyens recevant le fluide acheminé sous pression en provenance des moyens de pompage.

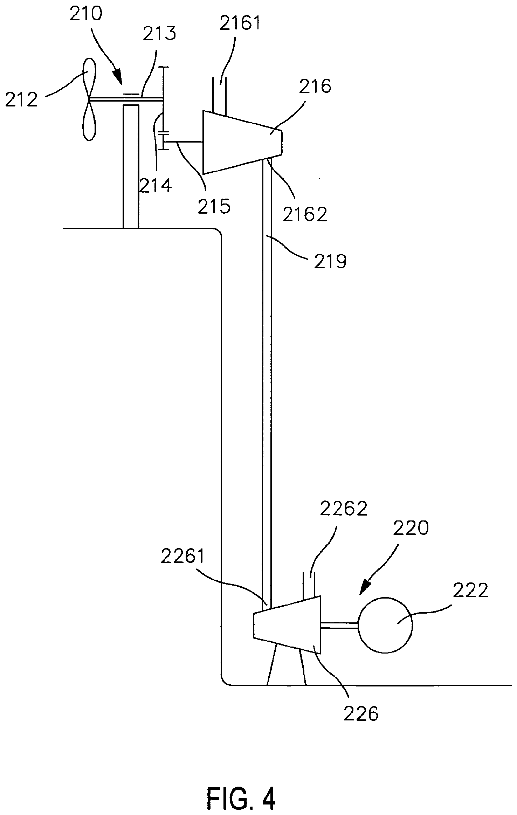

Ces moyens peuvent ainsi être des moyens de conversion d'énergie tels qu'une turbine activée par une arrivée 119 d'eau sous pression (exemple de la figure 2) ou par une arrivée d'air sous pression (exemple de la figure 4). D'autres types de moyens de conversion d'énergie sont envisageables.

De tels moyens de conversion d'énergie convertissent l'énergie pneumatique ou hydraulique du fluide sous pression en une énergie de type différent, typiquement une énergie électrique.

Il est également possible que les « moyens de conversion ou de stockage d'énergie » soient des moyens de stockage d'énergie.

Il peut ainsi s'agir d'un réservoir de fluide sous pression. Il peut également s'agir d'un réservoir de fluide (notamment d'eau) placé en hauteur, dans lequel l'énergie est accumulée sous forme d'énergie potentielle.

On peut d'ailleurs prévoir un moyen tel qu'une vanne trois voies sur le conduit d'acheminement de fluide sous pression pour diriger sélectivement ce fluide vers un moyen de conversion d'énergie, ou un moyen de stockage d'énergie, selon ce qui est désiré à un moment donné.

Cette possibilité est représentée schématiquement sur la figure 3a.

Sur cette figure on voit une partie 110 de dispositif comprenant des moyens de récupération d'énergie du courant marin, couplés à des moyens de pompage qui envoient du fluide sous pression dans un conduit 119.

A son arrivée à terre le conduit 119 est muni d'une vanne trois voies qui peut être commandée pour envoyer le fluide sous pression vers une turbine 121, ou vers un réservoir en hauteur R que le fluide peut atteindre grâce à sa pression.

Le réservoir peut ensuite servir pour le délestage d'une part de son énergie notamment lorsque le courant du fluide est faible.

Cette possibilité offre une solution additionnelle pour réguler le fonctionnement du dispositif.

Il est par exemple possible de choisir de dériver vers le réservoir l'eau mise sous pression dans le conduit 119 au plus fort d'une marée, pour ensuite rediriger cette eau vers la turbine 121 lorsque le courant est moins fort.

### Précisions sur la pompe centrifuge multicellulaire

### ∘ Compensation de la poussée

On va dans cette section donner en référence aux figures 2A à 2C quelques précisions qui peuvent s'appliquer avantageusement aux moyens de pompage, réalisés par exemple sous forme d'une pompe centrifuge multicellulaire.

La figure 2A illustre de manière très schématique le trajet de lignes de courant du fluide (par exemple de l'eau) mis en compression dans une pompe centrifuge multicellulaire.

Les trajectoires de l'eau mise en pression sont ainsi représentées par les lignes courbes et fléchées.

Chaque étage Ei de la pompe centrifuge multicellulaire est délimité par une aube qui tourne autour de l'axe A de la pompe .

Chaque aube comprend une portion centrale évidée pour recevoir à proximité de l'axe A l'eau en provenance de l'étage précédent de la pompe. La rotation de l'aube éjecte l'eau par la seule sortie offerte par l'aube, à savoir une sortie périphérique.

L'eau est ainsi injectée dans l'étage suivant, sa pression étant augmentée par la traversée de l'aube.

On remarque que la face aval de l'aube présente face à la direction parallèle à l'axe A une surface plus importante que sa face amont (qui est évidée dans sa portion centrale).

La pression résultante appliquée sur l'aube est donc dirigée vers l'amont (vers la gauche des figures - voir figure 2B).

Les pressions résultantes additionnées des aubes de la pompe centrifuge multicellulaire génèrent ainsi une contre-pression dirigée vers l'amont qui peut être significative. Cette contre-pression s'exerce sur l'arbre de rotation qui lie la pompe aux moyens de récupération d'énergie situés en amont d'elle.

Le fait de disposer une telle pompe centrifuge multicellulaire avec son axe de rotation parallèle ou sensiblement parallèle à la direction du courant permet de contrer la poussée exercée par les moyens de récupération d'énergie (hélice) sur les moyens de pompage. Il est ainsi possible d'équilibrer les forces axiales s'exerçant entre les éléments à l'intérieur de l'appareil.

Cet effet de compensation, illustré sur la figure 2C, permet dediminuer dans une grande mesure les contraintes de fixation de l'ensemble hélice-pompe centrifuge dans le carter 111 ou le venturi 118 (figure 2).

### ∘ Auto-régulation

L'utilisation d'une pompe centrifuge multicellulaire dans le contexte de l'invention permet également d'obtenir un effet avantageux d'auto-régulation de la vitesse de rotation des moyens de récupération d'énergie.

Ces moyens comprennent comme on l'a dit typiquement une turbine, qui doit en pratique tourner dans une certaine gamme de vitesses de rotation.

Notamment, la turbine ne devra pas tourner trop vite (même si l'augmentation apporte de la puissance) car cela serait susceptible d'endommager le dispositif.

La puissance fournie par la turbine est proportionnelle au cube de la vitesse du courant.

D'un autre côté, la puissance absorbée par la pompe est proportionnelle au cube de la vitesse de rotation de l'axe (entraîné par la turbine). Donc plus l'axe tourne vite plus la pompe freine puissamment la rotation de cet axe - et par conséquent de la turbine dont l'axe est solidaire.

Cette disposition permet ainsi une auto-régulation de la vitesse de rotation de la turbine, dont on évite l'emballement en cas de courant fort.

On précise d'ailleurs que selon un mode de mise en oeuvre particulier, il est possible d'exploiter cet effet avantageux d'auto-régulation en couplant directement la sortie de fluide sous pression de la pompe avec des moyens de conversion d'énergie (une turbine entraînée par l'eau sous pression), installés sur site.

Dans ce cas l'énergie serait convertie sur place, en une énergie électrique par exemple par l'intermédiaire d'un alternateur à aimants permanents qui, tournant à vitesse constante, permet de générer un courant de fréquence stable.

Ce mode de réalisation ne s'inscrit pas dans les objectifs principaux de l'invention - il peut néanmoins être considéré comme avantageux indépendamment des autres aspects de l'invention.

### Description d'un deuxième mode de réalisation

La figure 4 illustre un exemple d'un dispositif pour récupérer l'énergie du vent.

Sur cette figure, le dispositif 200 représenté comprend une première partie 210 et une deuxième partie 220, pouvant être localisée à distance de la première partie 210.

La première partie 210 comprend un mât 211 fixé au sol, une hélice 212 montée rotative par rapport au mât 211 (cette hélice pouvant également être disposée dans un venturi), un premier arbre de transmission 213 apte à être entraîné en rotation par l'hélice 212, un mécanisme multiplicateur 214, un deuxième arbre de transmission 215, un compresseur 216 apte à être entraîné par le deuxième arbre 215.

Le compresseur 216 présente une entrée d'air 2161 et une sortie d'air 2162.

Le dispositif comprend en outre un conduit 219 de transport d'air comprimé. Le conduit 219 est connecté à l'une de ses extrémités à la sortie 2162 du compresseur 216 et à l'autre de ses extrémités à une entrée 2261 d'une turbiné à air comprimé 226 de la deuxième partie 220.

La deuxième partie 220 comprend une turbine (ou moteur) à air comprimé 226 et un générateur d'électricité 222, tel qu'un alternateur, couplé à la turbine 226. La turbine à air comprimé 226 comprend une entrée d'air 2261 connectée au conduit 219 par laquelle de l'air comprimé est admis et une sortie d'air 2262 par laquelle de l'air est évacué vers l'atmosphère.

En fonctionnement, l'air en circulation dans l'atmosphère (vent) entraîne en rotation l'hélice 212.

Le mouvement de rotation de l'hélice 212 est transmis par le biais du premier arbre d'entraînement 213, du mécanisme multiplicateur 214 et du deuxième arbre d'entraînement 215 au compresseur 216. Le mécanisme multiplicateur 214 permet de convertir le mouvement de rotation du premier arbre 213 en un mouvement de rotation du deuxième arbre 215 présentant une vitesse de rotation supérieure.

Le deuxième arbre d'entraînement 215 entraîne le compresseur 216. Le compresseur 216 prélève de l'air de l'atmosphère par l'entrée 2161 et injecte l'air prélevé dans le conduit 219 par la sortie 2162. L'air est injecté par le compresseur 216 à une pression élevée.

Le compresseur 216 met en circulation l'air sous pression dans le conduit 219. L'air est transporté par le conduit 219 jusqu'à la turbine 226.

L'air sous pression entraîne en rotation la turbine 226.

La turbine 226 entraîne à son tour le générateur 222 qui convertit le mouvement de rotation de la turbine 226 en un courant électrique.

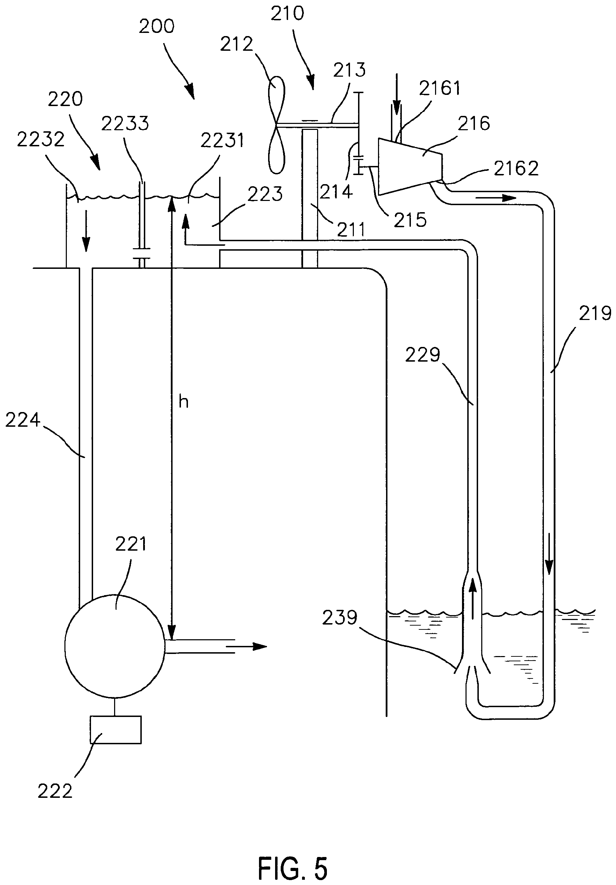

La figure 5 représente de manière schématique une variante du dispositif de la figure 4.

Dans cette variante, le dispositif 200 comprend un conduit 219 de transport d'air comprimé et un conduit 229 de transport d'un mélange eau + air. Les conduits 219 et 229 sont reliés l'un à l'autre au niveau d'une jonction 239 immergée dans une étendue d'eau et formant un injecteur de type Giffard.

La deuxième partie 220 comprend un réservoir de stockage 223, un conduit d'alimentation en eau 224, une turbine hydraulique 221, de type Pelton ou Francis par exemple, et un générateur d'électricité 222, tel qu'un alternateur, couplé à la turbine 221.

Le réservoir de stockage 223 est situé en hauteur par rapport à la turbine 221.

Le réservoir 223 comprend deux compartiments 2231, 2232 et une cloison évidée dans sa partie inférieure 2233 s'étendant entre les deux compartiments. Le premier compartiment 2231 est apte à être alimenté en mélange eau + air par le conduit 229. Ce premier compartiment 2231 permet à l'air de s'échapper dans l'atmosphère, tandis que l'eau du premier compartiment 2231 peut s'écouler dans le deuxième compartiment à travers la cloison 2233.

En fonctionnement, l'air en circulation dans l'atmosphère (vent) entraîne en rotation l'hélice 212.

Le mouvement de rotation de l'hélice 212 est transmis par le biais du premier arbre d'entraînement 213, du mécanisme multiplicateur 214 et du deuxième arbre d'entraînement 215 au compresseur 216. Le mécanisme multiplicateur 214 permet de convertir le mouvement de rotation du premier arbre 213 en un mouvement de rotation du deuxième arbre 215 présentant une vitesse de rotation supérieure.

Le deuxième arbre d'entraînement 215 entraîne le compresseur 216. Le compresseur 216 prélève de l'air de l'atmosphère par l'entrée 2161 et injecte l'air prélevé dans le conduit 219 par la sortie 2162. L'air est injecté par le compresseur 216 à une pression élevée.

Le compresseur 216 met en circulation l'air sous pression dans le conduit 219. L'air est transporté par le conduit 219 jusqu'à l'injecteur 239.

L'injecteur 239 injecte dans le conduit 229 un mélange comprenant de l'air en provenance du conduit 219 et de l'eau prélevée dans l'étendu d'eau. Le mélange eau + air est transporté par le conduit 219 jusqu'au réservoir de stockage 223.

L'eau passe du premier compartiment 2231 au deuxième compartiment 2232.

L'eau stockée dans le deuxième compartiment 2232 est utilisée pour alimenter la turbine 221. La turbine 221 est entraînée en rotation par l'eau sous pression en provenance du réservoir de stockage 223. La pression de l'eau qui alimente la turbine est proportionnelle à la hauteur h de la surface de l'eau contenue dans le réservoir par rapport à la turbine 221.

La turbine 221 entraîne à son tour le générateur 222 qui convertit le mouvement de rotation de la turbine 221 en un courant électrique de fréquence stable.

On notera que la vitesse du vent varie continuellement, ce qui entraîne nécessairement une variation de l'énergie cinétique qui peut être captée par l'hélice 212. Cependant, le réservoir 223 permet de réguler le débit d'eau qui alimente la turbine 221, de manière à réguler la vitesse de rotation de la turbine 221.

Par ailleurs, comme dans le cas du premier mode de réalisation, on peut prévoir des moyens de réglage de l'orientation des pales de l'hélice 212 ou de la turbine 221, de manière à réguler la vitesse de rotation de l'hélice 212 et/ou de la turbine 221 et obtenir un courant électrique de période sensiblement constante.

On peut également prévoir qu'une ou plusieurs hélices 212 entraînant chacune un compresseur associé 216 alimentent un ou plusieurs moteurs ou turbines à air comprimé 226 via un ou plusieurs conduits de transport 219, chaque moteur ou turbine 226 étant couplé à un ou plusieurs alternateurs 222.

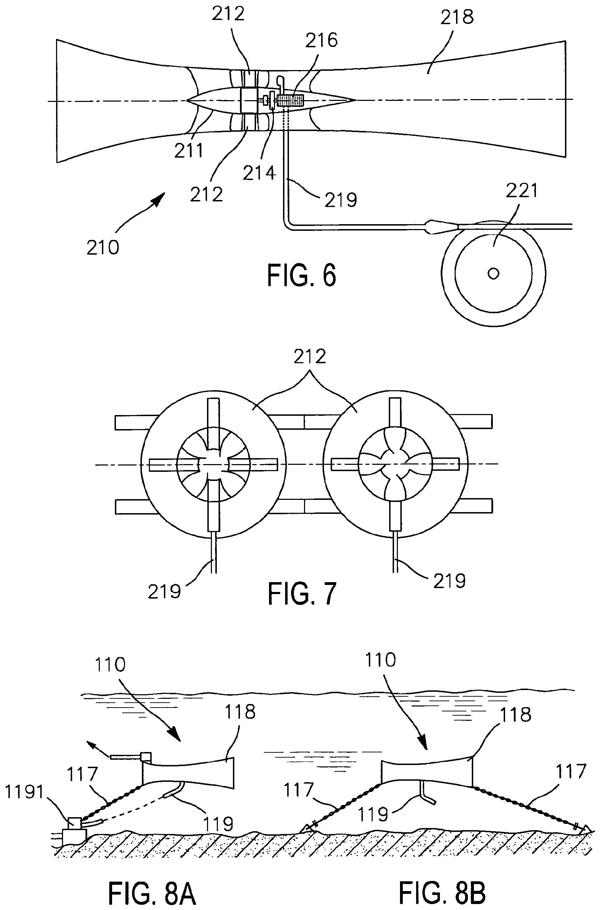

Les figures 6 et 7 représentent de manière schématique un exemple d'appareil pour capter une énergie cinétique d'un courant marin, tel qu'il peut être utilisé par exemple dans le dispositif de la figure 2.

Sur ces figures, l'appareil 210 comprend un carter 211, deux hélices 212 agencées de part et d'autre du carter 211, un mécanisme multiplicateur 214, un compresseur 216 apte à être entraînée par les hélices 212 et un tube 218 de forme générale convergente - divergente formant venturi.

Le carter 211 et les hélices 212 s'étendent à l'intérieur du tube 218.

### Illustration d'implantations dans des courants marins

Les figures 8A et 8B représentent de manière schématique un exemple d'appareil destiné à être immergé pour capter une énergie d'un courant marin, tel qu'il peut être utilisé par exemple dans le dispositif de la figure 2.

Sur ces figures, l'appareil 110 comprend un tube 118 de forme générale convergente - divergente formant venturi.

Le tube 118 est arrimé au fond de la mer par l'intermédiaire d'une ou plusieurs chaîne(s) d'arrimage 117. Le tube 118 peut également être solidaire d'un pieu ou d'une plateforme submersible ou non, elle-même ancrée ou fixée sur des pieux

Les caractéristiques d'un courant créé par la marée sont les suivantes :
- le courant de marée est alternatif, il est dirigé en moyenne durant une période (typiquement de 6 heures) dans un premier sens et durant une période dans un deuxième sens, opposé au premier sens,
- sa force varie de façon sinusoïdale, avec un maximum se produisant environ une demi-période après un changement de sens du courant, ce maximum présentant une intensité variable en fonction des phases de la lune qui crée la marée.

Les caractéristiques (intensité et direction) d'un tel courant sont prévisibles et connues.

L'appareil exposé à ce courant présente les caractéristiques suivantes :
- Selon une première possibilité (figure 8A), l'appareil est apte à « éviter », c'est-à-dire à s'orienter de lui-même selon la direction et le sens du courant.

Dans ce cas, l'appareil est fixé au fond de la mer par une chaîne d'arrimage 117, ou d'autres moyens tels que définis précédemment, et un joint tournant 1191 de sorte que l'eau sous pression généré par la pompe puisse circuler sans encombre dans le conduit de transport 119 quelle que soit l'orientation de l'appareil.
- Selon une deuxième possibilité (figure 8B), l'orientation de l'appareil est fixe. L'appareil est alors disposé dans la direction du courant.

Dans ce cas, l'appareil, soumis à un flux de fluide alternatif, comprend une turbine apte à être entraînée alternativement dans un premier sens, puis dans un deuxième sens, opposé au premier sens. L'appareil comprend un inverseur apte à transmettre à la pompe un mouvement de rotation en sens constant malgré les inversions de sens de rotation de la turbine.

Dans une variante de ce mode de réalisation, l'appareil comprend une turbine comprenant une hélice à pales inversables et des moyens pour inverser l'orientation des pales de l'hélice en fonction du sens du courant, de sorte que la turbine tourne selon un sens de rotation constant malgré les inversions de sens du courant.

La turbine pourra être une turbine de type Kaplan comprenant une hélice présentant des pales à inclinaison variable, permettant d'adapter l'inclinaison des pales à une vitesse du courant marin, afin d'obtenir un mouvement de rotation sensiblement constant de la turbine.

Le tube de forme convergente - divergente crée un effet d'aspiration de l'eau de mer et permet d'accélérer la vitesse de l'eau qui entraîne la turbine.

La turbine entraîne la pompe centrifuge. La pompe centrifuge est éventuellement agencée dans un bulbe annexe, qui inclut un système d'étanchéité du premier arbre d'entraînement, une butée de retenue et le multiplicateur de vitesse. Le multiplicateur de vitesse est apte à convertir une vitesse de rotation en sortie de la turbine comprise entre 100 et 600 tours par minute en une vitesse de rotation en entrée de la pompe comprise entre 3000 et 6000 tours par minute. La pompe peut ainsi refouler de l'eau à une pression élevée, de l'ordre de 200 bars.

On pourra prévoir des moyens pour compenser le couple créé par la turbine. Selon une première possibilité, le carter de l'appareil peut comprendre des ailerons, ou un gouvernail de dérive, éventuellement asservis à la vitesse du courant. Selon une deuxième possibilité, l'appareil peut comprendre un nombre pair de turbines, les turbines étant associées par couple de turbines, deux turbines d'un même couple étant entraînées dans des sens de rotation opposés sous l'effet du même courant marin.

Par ailleurs, l'appareil est disposé à une profondeur suffisamment importante pour être à l'abri des tirants d'eau de navires susceptible de se déplacer à la surface de la mer. Cependant, l'appareil est à une distance du fond de la mer appropriée pour pouvoir se mouvoir sans rencontrer d'obstacles naturels.

L'appareil peut comprendre une ou plusieurs ancre(s) reliée(s) à la ou les chaîne(s) pour fixer l'appareil au fond de la mer. Il s'agit par exemple d'ancres telles que celles qui sont généralement utilisées par les bateaux phare, les balises de taille importante ou même les plates formes de forage en mer.

L'appareil étant submersible, sa forme est adaptée pour lui donner une assiette appropriée, à une profondeur donnée, et selon une orientation en fonction du courant.

L'évacuation de l'eau prélevée par la pompe centrifuge peut être réalisée vers le fond de la mer. Selon une première possibilité, le conduit de transport de l'eau sous pression peut servir de moyens de ligne de mouillage, ce qui requière l'utilisation d'un joint tournant en un point fixe pour connecter une première portion de conduit en provenance de l'appareil à une deuxième portion de conduit à destination de la partie au sol du dispositif, pour permettre à l'appareil d'éviter.

Selon une deuxième possibilité, une chaîne ou un câble de mouillage 117 assure l'arrimage de l'appareil tandis qu'un conduit 119 assure l'acheminement de l'eau sous pression vers la partie au sol du dispositif. Dans ce cas, une sortie verticale à point tournant est prévue sur l'appareil. Le conduit peut être maintenu en flottaison au dessus de l'appareil par des moyens appropriés. Le conduit est maintenu au niveau de flottaison sur toute la trajectoire décrite par l'appareil au cours de son évitage. Cette disposition empêche une éventuelle interférence entre la chaîne ou le câble de mouillage et le conduit d'évacuation.

Selon un mode de réalisation, l'appareil est immobilisé par deux lignes de mouillage attachées au niveau de deux extrémités de l'appareil, ce qui permet de maintenir l'appareil selon une direction du courant. Ce mode de réalisation permet de connecter à un même conduit plusieurs appareils produisant chacun de l'eau sous pression.

### Exemple de variante de réalisation

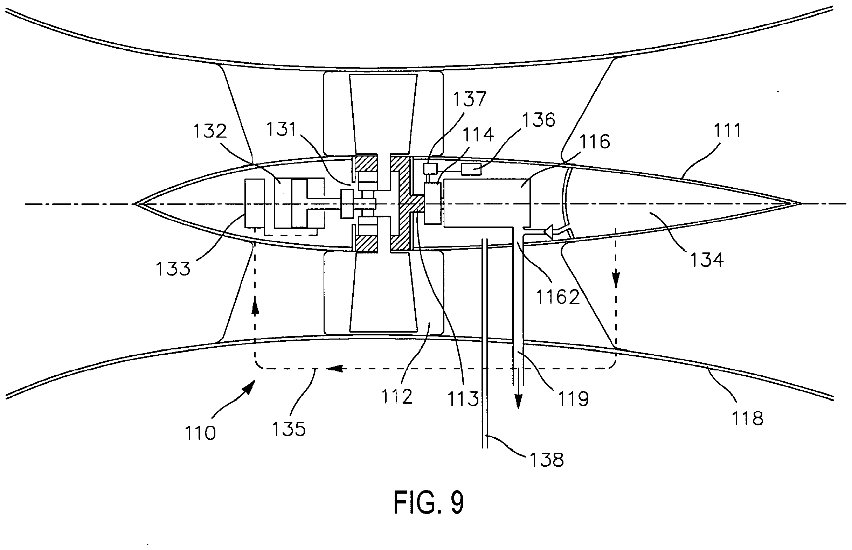

La figure 9 représente de manière schématique une variante du dispositif de la figure 2.

Dans cette variante, l'appareil immergé 110 comprend des moyens 130 pour faire varier l'orientation des pales de l'hélice 112. Ces moyens 130 comprennent un mécanisme 131 d'orientation des pales, incluant notamment un vérin hydraulique 132, des moyens de commande 133 d'asservissement du vérin hydraulique, un réservoir 134 de liquide sous pression et un circuit hydraulique 135 d'alimentation du vérin hydraulique 132.

Dans une telle variante, une partie du liquide sous pression produit par la pompe 116 est prélevé en sortie 1162 de pompe et stocké dans le réservoir 134. Le liquide sous pression stocké dans le réservoir 134 est destiné à alimenter le mécanisme d'orientation des pales de l'hélice 112. A cet effet, les moyens de commande 133 commandent le vérin 132 pour faire varier l'orientation des pales de l'hélice 112 en fonction du courant. Le vérin 132 est alimenté en liquide sous pression via le circuit hydraulique 135.

Le réservoir 134 permet de stocker une partie du liquide sous pression pour pouvoir commander l'orientation des pales de l'hélice 112, même lorsque l'hélice 112 n'est pas entraînée en rotation. Le liquide sous pression contenu dans le réservoir 134 constitue une réserve d'énergie disponible à cet effet.

L'appareil 110 peut comprendre en outre une batterie 136 et un générateur électrique 137 pour l'alimentation électrique des commandes d'asservissement.

Les moyens 130 pour faire varier l'orientation des pales de l'hélice permet d'adapter l'inclinaison des pales à une vitesse du courant marin, afin d'obtenir un mouvement de rotation sensiblement constant de l'hélice 112 et ainsi de lisser la puissance récoltée par celle-ci.

On peut prévoir de régler l'inclinaison des pales de l'hélice 112 en fonction de divers paramètres, tels que :
- un paramètre extérieur physique, vitesse ou pression, créés par une vitesse du courant mesurée au droit de l'appareil,
- des paramètres d'orientation des pales pré-programmés en fonction de vitesses prévues des courants de marée,
- des paramètres spécifiques transmis par un opérateur aux moyens de commande en fonction de critères spécifiques.

Un tel dispositif permet de délivrer un courant alternatif de fréquence stable.

Il est ainsi possible de réguler cette fréquence, non seulement par un premier réglage du pointeau de la buse d'alimentation de la turbine 121 localisée à distance (lorsqu'il s'agit d'une turbine Pelton) ou par un réglage de l'orientation des pâles de la turbine 121 (lorsqu'il s'agit d'une turbine Francis), mais également, par un deuxième réglage de l'orientation des pales de l'hélice 112 entraînant la pompe 116. Ce double réglage permet de réguler en amont le débit et la pression du fluide alimentant la turbine 121 et d'obtenir, en combinant si nécessaire les deux modes de régulation, une vitesse quasi-constante de l'alternateur 122.

Le premier réglage appliqué à la turbine 121 permet de faire varier le débit d'alimentation en eau de la turbine 121, ce qui a pour effet de régler la vitesse d'entrainement de l'alternateur 122. Le deuxième réglage appliqué à l'hélice 112 permet de faire varier la vitesse de rotation de la pompe 116 en fonction de la vitesse du courant, ce qui a pour effet de régler la pression de l'eau injectée dans le conduit 119 en sortie de pompe. Les premier et deuxième réglages peuvent être commandés soit indépendamment, soit concomitamment.

Les paramètres du programme de régulation peuvent être soit préenregistrés dans une mémoire des moyens de commande 133, soit être transmis depuis la partie 120 au sol vers les moyens de commande 133, par un fil ou par ondes par exemple.

Enfin, l'appareil 110 comprend un conduit de communication 138 de l'intérieur du carter 11 avec l'atmosphère. Le conduit 138 peut par exemple être solidaire du conduit 119 de circulation de l'eau sous pression vers la partie au sol 120. Alternativement, le conduit 138 peut être indépendant du conduit 119. Dans ce cas, le conduit 138 peut comprendre une extrémité maintenue à la surface de l'eau par un flotteur (un tel flotteur pouvant par ailleurs supporter une pluralité de conduits similaires en provenance d'autres appareils immergés). Le conduit 138 peut être utilisé comme conduit de renouvellement d'air ou de gaz pour injecter à l'intérieur de l'appareil 110 de l'air ou un gaz neutre.

### Autre exemple de réalisation

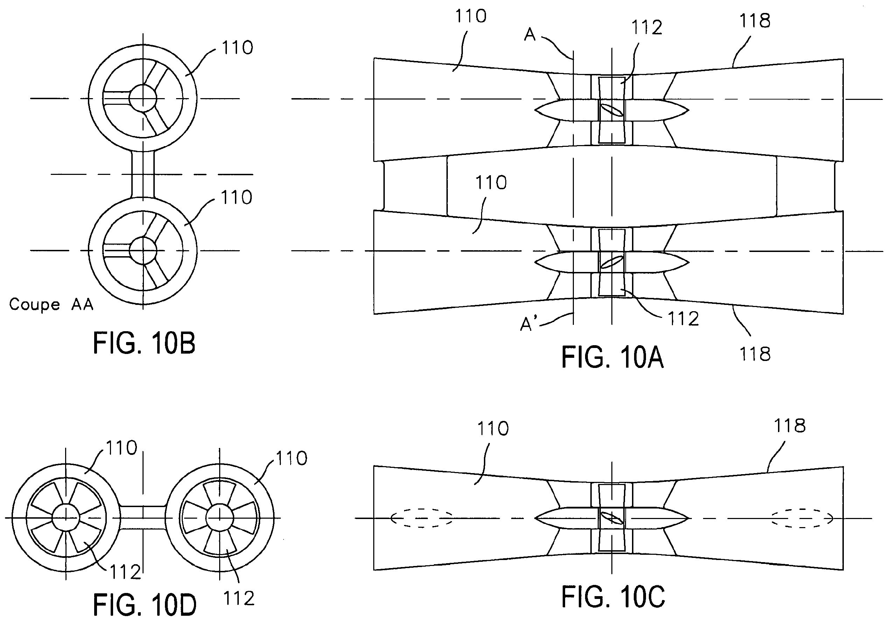

Les figures 10A à 10D représentent de manière schématique un dispositif comportant deux appareils 110 destinés à être immergés pour capter une énergie d'un courant marin.

Les deux appareils 110 sont positionnés en parallèles et fixés l'un à l'autre. Les deux appareils 110 sont identiques, exceptés qu'ils comprennent des hélices 112 aptes à tourner en sens opposés l'une par rapport à l'autre. Cette caractéristique permet une annulation des effets des moments créés par chaque hélice 112.

Les deux venturis 118 sont maintenus en des positions constantes l'un par rapport à l'autre et délimitent entre eux un espace défini et constant.

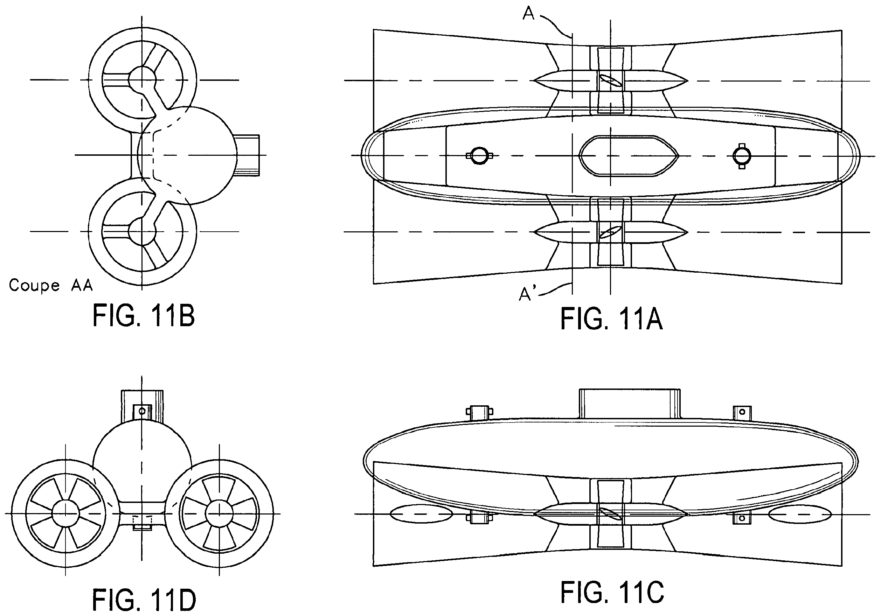

Comme illustré sur les figures 11A à 11D, cet espace peut être utilisé comme une zone de réception d'un appareil de maintenance (sous-marin de service). L'appareil de maintenance peut venir se positionner dans cet espace et être immobilisé par rapport aux appareils par des moyens d'immobilisation, tels que des vérins ou des volets par exemple.

En outre, des moyens de communication (sas) entre l'appareil de maintenance et chacun des appareils 110 peuvent être prévus pour permettre à des opérateurs de pénétrer à l'intérieur des carters 111 des appareils pour procéder à des opérations de contrôle ou de réparation éventuelles.

On peut également prévoir que l'un ou l'autre des côtés de l'appareil de maintenance comportent un ou plusieurs sas permettant d'accéder à des sas correspondants ou des portes correspondantes sur chaque ensemble hélice-pompe.

Ceci permettra de mettre en communication directe chaque ensemble hélice-pompe avec l'appareil de maintenance.

L'appareil de maintenance peut également être arrimé aux appareils 110 pour permettre l'installation sur site ou le déplacement sur un site choisi des appareils 110, en vue de l'entretien ou de la modification des appareils 110.

Des moyens de levage ou treuillage peuvent être intégrés à l'appareils de maintenance ou aux dispositifs permettant de dissocier la chaîne ou le câble de mouillage 117 des appareils ou de le remailler.

### Application à une configuration multisource - utilisation de manifoldss

On va ici donner quelques détails sur des moyens particuliers pour réguler le fonctionnement d'un dispositif selon l'invention, exposé à des courants non constants.

Comme cela a déjà été mentionné, il peut être avantageux de prévoir plusieurs ensemble 110 formant chacun source de fluide sous pression pour coupler leurs conduits 119 à un ou plusieurs dispositifs 120 au sol incluant une turbine et un alternateur de façon à ce que ces derniers fonctionnent au meilleur régime choisi pour délivrer directement un courant électrique de période appropriée.

La figure 15 représente de manière schématique un diagramme de connexion de plusieurs appareils dans un dispositif pour capter une énergie cinétique d'un courant marin.

Le dispositif comprend un manifold recevant du fluide sous pression en provenance de plusieurs sources de type 110 (couples hélice-pompe) TP1, TP2, TP3 et délivrant suivant un programmé pré-établi du fluide sous pression à un ou plusieurs moyens de conversion d'énergie de type 120 (couples turbine-alternateur PA1, PA2, PA3), par un procédé de commande de vannes approprié.

Le manifold peut autoriser toutes les combinaisons de mises en relation entre d'une part une ou plusieurs des sources TP1, TP2, TP3 avec des taux d'admission de chaque source contrôlés, et d'autre part un ou plusieurs des moyens de conversion d'énergie PA1, PA2, PA3.

En fonction des caractéristiques nominales de fonctionnement de chaque moyen de conversion d'énergie (qui correspondent ici aux « seconds » moyens de conversion d'énergie selon les conventions de ce texte), et des caractéristiques des courants aux endroits où sont implantés les trois sources, on pourra programmer les mises en relation du manifold pour faire fonctionner une ou plusieurs des moyens de conversion d'énergie.

Dans le cas des courants de marée, les caractéristiques des courants étant connues à l'avance cette programmation peut être faite à l'avance également. Et en fonction des caractéristiques des courants dans une région donnée on pourra dimensionner les turbines de récupération d'énergie ainsi que les seconds moyens de conversion d'énergie pour maximiser le rendement global du système tout en faisant fonctionner les différents composants dans leur plage nominale.

La figure 14 illustre de manière schématique une configuration dans laquelle plusieurs sources (ici deux sources TP1, TP2) peuvent être sélectivement exposées à un courant C par l'intermédiaire d'arrivées de courant 171, 172.

La source TP1 est associée à l'arrivée de courant 171, qui comporte une section amont 171a et une section aval 171b apte à alimenter la source en courant.

De la même manière, la source TP2 est associée à l'arrivée de courant 172, qui comporte une section amont 172a et une section aval 172b apte à alimenter la source en courant.

Ces deux arrivées de courant placées en amont des deux sources respectives sont par ailleurs reliées par des canaux traversiers 1710 et 1720.

Le canal 1710 peut dériver vers l'arrivée de courant 172 le flux engagé dans la section amont de l'arrivée de courant 171, si le volet 1711 est en position de fermeture du canal (position représentée en pointillés).

De la même manière, le canal 1720 peut dériver vers l'arrivée de courant 171 le flux engagé dans la section amont de l'arrivée de courant 172, si le volet 1721 est en position de fermeture du canal (position représentée en pointillés).

En commandant la position des volets 1711 et 1721 on peut sélectivement alimenter une ou deux des sources avec le courant. Il est également possible de concentrer sur une source unique les flux engagés dans les deux arrivées de courant. Il est aussi possible de fermer une des deux arrivées, ou les deux (par exemple pour raison de service).

On dispose ainsi d'un maniflod « amont », disposé avant les sources, pour contrôler l'intensité du flux traversant chaque source.

Et on retrouve sur ce schéma un manifold aval similaire à celui de la figure 14, pour distribuer de manière désirée sur l'un ou l'autre des deux moyens de conversion ou de stockage d'énergie PA1, PA2 (ou sur les deux) le fluide sous pression issus des deux sources.

Les deux manifolds, amont et aval, de la figure 14 contrôlent ici l'alimentation de deux sources et de deux moyens de conversion ou de stockage d'énergie. Il est possible d'en prévoir un nombre quelconque, avec les dérivations et commandes adaptées.

Ici encore, le fonctionnement de chacun des deux manifolds peut être programmé - par exemple en fonction de caractéristiques connues à l'avance du courant.

Le manifold amont et le manifold aval sont deux moyens - qui peuvent avantageusement être combinés - pour réguler le fonctionnement des moyens de conversion d'énergie PAi.

## Revendications

1. Dispositif (100, 200) pour capter une énergie cinétique d'un fluide naturellement en mouvement, comprenant :
- des premiers moyens de conversion (112, 212) aptes à convertir le mouvement du fluide en un mouvement d'entraînement pour entraîner des moyens de pompage ou de compression (116, 216),
- des moyens de pompage ou de compression (116, 216) entraînés par les premiers moyens de conversion (112, 212), les moyens de pompages prélevant du fluide du courant et le mettant en circulation pour le transporter vers des moyens distants de stockage (223) ou de conversion (121, 122, 221, 222, 226) d'énergie,
**caractérisé en ce que** les moyens de pompage ou de compression comprennent une pompe centrifuge multicellulaire dont l'axe de rotation est parallèle ou sensiblement parallèle à la direction du courant.

2. Dispositif selon la revendication 1, comprenant des moyens (118, 218) pour accélérer une vitesse du fluide en mouvement.

3. Dispositif selon l'une des revendications qui précèdent, comprenant des moyens de transmission (113, 114, 115, 213, 214, 215) interposés entre les moyens de conversion (112, 212) et les moyens de pompage ou de compression (116, 216), les moyens de transmission (113, 114, 115, 213, 214, 215) étant aptes à multiplier une vitesse du mouvement d'entraînement généré par les moyens de conversion (112, 212).

4. Dispositif selon l'une des revendications qui précèdent, comprenant des moyens (119, 219) pour transporter le fluide en circulation vers les moyens distants de stockage (223) ou de conversion (121, 122, 221, 222, 226).

5. Dispositif selon l'une des revendications qui précèdent, comprenant des moyens distants (121, 122, 221, 222, 226) de conversion incluant une turbine (121, 221, 226) apte à être entraînée en rotation par le fluide en circulation et un alternateur (122, 222) apte à convertir la rotation de la turbine en une énergie électrique.

6. Dispositif selon l'une des revendications 1 à 5, comprenant des moyens distants de stockage incluant un réservoir de fluide sous pression.

7. Dispositif selon l'une des revendications 1 à 6, comprenant des moyens (111) pour orienter les moyens de conversion (112, 212) en fonction d'une direction du mouvement du fluide.

8. Dispositif selon l'une des revendications qui précèdent, comprenant des moyens de réglage pour ajuster le mouvement d'entraînement généré par les moyens de conversion (112, 212) en fonction d'une vitesse du fluide.

9. Dispositif selon la revendication 8, dans lequel les moyens de réglage (130) comprennent des moyens d'orientation (132) des pales d'une hélice (112) et des moyens (134) de stockage d'énergie, par exemple de stockage de fluide, pour alimenter les moyens d'orientation en énergie.

10. Dispositif selon l'une des revendications qui précèdent, comprenant un carter (111) profilé pour que le dispositif s'oriente de lui-même en fonction d'une direction du mouvement du fluide.

11. Dispositif selon l'une des revendications qui précèdent, dans lequel le dispositif comprend des moyens de fixation, notamment des moyens d'ancrage (117) pour maintenir le dispositif selon une orientation fixe.

12. Dispositif selon l'une des revendications qui précèdent, comprenant d'une part une pluralité de moyens de conversion (112, 212) et de pompage ou de compression (116, 216) associés répartis en différents sites géographiques, et d'autre part des moyens distants (121, 122, 221, 222, 226) de conversion incluant une turbine (121, 221, 226) apte à être entraînée en rotation par du fluide en circulation en provenance des différents moyens de pompage ou de compression (116, 216) et un alternateur (122, 222) apte à convertir la rotation de la turbine en une énergie électrique.

13. Dispositif selon la revendication 12, comprenant en outre un manifold apte à sélectivement connecter ou déconnecter chacun des moyens de conversion (112, 212) et de pompage ou de compression (116, 216) avec les moyens distants de conversion (121, 122, 221, 222, 226) pour réguler la quantité de fluide reçue par les moyens distants de conversion.

14. Dispositif selon l'une des revendications qui précèdent, comprenant des moyens (138) d'aération des moyens de pompage ou de compression (116, 216).

15. Dispositif selon l'une des revendications qui précèdent, dans lequel les premiers moyens de conversion (112, 212) comprennent une hélice, le dispositif comprenant :
- des moyens distants (121, 122, 221, 222, 226) de conversion incluant une turbine génératrice (121, 221, 226) apte à être entraînée en rotation par le fluide en circulation et un alternateur (122, 222) apte à convertir la rotation de la turbine en une énergie électrique,
- des moyens de réglage de l'orientation des pales de l'hélice (112) entraînant les moyens de pompage (116, 216), et/ou
- des moyens de réglage du pointeau d'une buse d'alimentation de la turbine génératrice (121, 221, 226)ou des moyens de réglage de l'orientation des pales de la turbine génératrice (121, 221, 226),
les moyens de réglage étant commandés pour réguler un débit et une pression du fluide alimentant la turbine génératrice (121, 221, 226) de manière à ce que l'alternateur (122, 222) génère un courant électrique de fréquence quasi-constante.

## Patentansprüche

1. Vorrichtung (100, 200) zum Auffangen einer kinetischen Energie eines sich natürlich in Bewegung befindlichen Fluids, umfassend:
- erste Umwandlungsmittel (112, 212), die imstande sind, die Bewegung des Fluids in eine Antriebsbewegung umzuwandeln, um Pump- oder Kompressionsmittel (116, 216) anzutreiben,
- Pump- oder Kompressionsmittel (116, 216), die von den ersten Umwandlungsmitteln (112, 212) angetrieben werden, wobei die Pumpmittel Fluid aus dem Strom entnehmen und dieses in Zirkulation versetzen, um es zu entfernten Speichermitteln (223) oder Umwandlungsmitteln (121, 122, 221, 222, 226) von Energie zu transportieren,
**dadurch gekennzeichnet, dass** die Pump- oder Kompressionsmittel eine multizelluläre Zentrifugalpumpe umfassen, deren Rotationsachse parallel oder etwa parallel zur Richtung des Stroms ist.

2. Vorrichtung nach Anspruch 1, umfassend Mittel (118, 218) zum Beschleunigen einer Geschwindigkeit des Fluids in Bewegung.

3. Vorrichtung nach einem der vorangehenden Ansprüche, umfassend Übertragungsmittel (113, 114, 115, 213, 214, 215) zwischen den Umwandlungsmitteln (112, 212) und den Pump- oder Kompressionsmitteln (116, 216), wobei die Übertragungsmittel (113, 114, 115, 213, 214, 215) imstande sind, eine Geschwindigkeit der von den Umwandlungsmitteln (112, 212) erzeugten Antriebsbewegung zu vervielfachen.

4. Vorrichtung nach einem der vorangehenden Ansprüche, umfassend Mittel (119, 219), um das Fluid in Zirkulation zu den entfernten Speicher- (223) oder Umwandlungsmitteln (121, 122, 221, 222, 226) zu transportieren.

5. Vorrichtung nach einem der vorangehenden Ansprüche, umfassend entfernte Umwandlungsmittel (121, 122, 221, 222, 226), einschließend eine Turbine (121, 221, 226), die imstande ist, von dem Fluid in Zirkulation rotierend angetrieben zu werden, und einen Generator (122, 222), der imstande ist, die Rotation der Turbine in eine elektrische Energie umzuwandeln.

6. Vorrichtung nach einem der Ansprüche 1 bis 5, umfassend entfernte Speichermittel, einschließend ein Reservoir von Fluid unter Druck.

7. Vorrichtung nach einem der Ansprüche 1 bis 6, umfassend Mittel (111), um die Umwandlungsmittel (112, 212) in Abhängigkeit von einer Richtung der Bewegung des Fluids auszurichten.

8. Vorrichtung nach einem der vorangehenden Ansprüche, umfassend Einstellmittel, um die von den Umwandlungsmitteln (112, 212) in Abhängigkeit von einer Geschwindigkeit des Fluids erzeugte Antriebsbewegung einzustellen.

9. Vorrichtung nach Anspruch 8, wobei die Einstellmittel (130) Ausrichtungsmittel (132) der Schaufeln einer Schraube (112) und Energiespeichermittel (134), beispielsweise zur Fluidspeicherung, umfassen, um die Ausrichtungsmittel mit Energie zu versorgen.

10. Vorrichtung nach einem der vorangehenden Ansprüche, umfassend ein Profilgehäuse (111), damit sich die Vorrichtung selbst in Abhängigkeit von einer Bewegungsrichtung des Fluids ausrichtet.

11. Vorrichtung nach einem der vorangehenden Ansprüche, wobei die Vorrichtung Befestigungsmittel, insbesondere Verankerungsmittel (117), umfasst, um die Vorrichtung gemäß einer festen Ausrichtung zu halten.

12. Vorrichtung nach einem der vorangehenden Ansprüche, umfassend zum einen eine Vielzahl von Umwandlungsmitteln (112, 212) und von zugeordneten Pump-oder Kompressionsmitteln (116, 216), die an verschiedenen geografischen Standorten verteilt sind, und zum anderen entfernte Umwandlungsmittel (121, 122, 221, 222, 226), einschließend eine Turbine (121, 221, 226), die imstande ist, von einem Fluid in Zirkulation, das von den verschiedenen Pump- oder Kompressionsmitteln (116, 216) kommt, rotierend angetrieben zu werden, und einen Generator (122, 222), der imstande ist, die Rotation der Turbine in eine elektrische Energie umzuwandeln.

13. Vorrichtung nach Anspruch 12, umfassend ferner einen Verteiler, der imstande ist, jedes der Umwandlungsmittel (112, 212) und Pump- oder Kompressionsmittel (116, 216) mit den entfernten Umwandlungsmitteln (121, 122, 221, 222, 226) selektiv zu verbinden oder zu entbinden, um die von den entfernten Umwandlungsmitteln empfangene Fluidmenge einzustellen.

14. Vorrichtung nach einem der vorangehenden Ansprüche, umfassend Lüftungsmittel (138) der Pump- oder Kompressionsmittel (116, 216).

15. Vorrichtung nach einem der vorangehenden Ansprüche, wobei die ersten Umwandlungsmittel (112, 212) eine Schraube umfassen, wobei die Vorrichtung umfasst:
- entfernte Umwandlungsmittel (121, 122, 221, 222, 226), einschließend eine erzeugende Turbine (121, 221, 226), die imstande ist, von dem zirkulierenden Fluid rotierend angetrieben zu werden, und einen Generator (122, 222), der imstande ist, die Rotation der Turbine in eine elektrische Energie umzuwandeln,
- Einstellmittel der Ausrichtung der Schaufeln der Schraube (112), die die Pumpmittel (116, 216) antreibt, und/oder
- Einstellmittel der Nadel einer Versorgungsdüse der erzeugenden Turbine (121, 221, 226) oder Einstellmittel der Ausrichtung der Schaufeln der erzeugenden Turbine (121, 221, 226),
wobei die Einstellmittel gesteuert werden, um einen Durchsatz und einen Druck des Fluids einzustellen, das die erzeugende Turbine (121, 221, 226) versorgt, so dass der Generator (122, 222) einen elektrischen Strom mit einer quasi konstanten Frequenz erzeugt.

## Claims

1. A device (100, 200) for collecting kinetic energy from a naturally moving fluid, comprising:
- first conversion means (112, 212) capable of converting the movement of the fluid into a driving movement in order to drive pumping or compression means (116, 216),
- pumping or compression means (116, 216) driven by the first conversion means (112, 212), the pumping means picking up fluid from the current and circulating it in order to transport it to remote energy storage (223) or conversion (121, 122, 221, 222, 226) means,
**characterized in that** the pumping or compression means comprise a multicellular centrifugal pump, the axis of rotation of which is parallel or substantially parallel to the direction of the current.

2. The device according to claim 1, comprising means (118, 218) for accelerating a velocity of the moving fluid.

3. The device according to any of the preceding claims, comprising transmission means (113, 114, 115, 213, 214, 215) interposed between the conversion means (112, 212) and the pumping or compression means (116, 216), the transmission means (113, 114, 115, 213, 214, 215) being capable of multiplying a velocity of the driving movement generated by the conversion means (112, 212) .

4. The device according to any of the preceding claims, comprising means (119, 219) for transporting the circulating fluid towards the remote storage (223) or conversion (121, 122, 221, 222, 226) means.

5. The device according to any of the preceding claims, comprising remote conversion means (121, 122, 221, 222, 226) including a turbine (121, 221, 226) capable of being driven into rotation by the circulating fluid and an alternator (122, 222) capable of converting the rotation of the turbine into electric energy.

6. The device according to any of claims 1 to 5, comprising remote storage means including a pressurized fluid tank.

7. The device according to any of claims 1 to 6, comprising means (111) for orienting the conversion means (112, 212) according to a direction of the movement of the fluid.

8. The device according to any of the preceding claims, comprising adjustment means for adjusting the driving movement generated by the conversion means (112, 212) according to a velocity of the fluid.

9. The device according to claim 8, wherein the adjustment means (130) comprise means (132) for orienting the blades of a propeller (112) and means (134) for storing energy, for storing fluid for example, for supplying energy to the orientation means.

10. The device according to any of the preceding claims, comprising a profiled case (111) so that the device orients itself according to a direction of the movement of the fluid.

11. The device according to any of the preceding claims, wherein the device comprises attachment means, notably anchoring means (117) for maintaining the device along a fixed orientation.

12. The device according to any of the preceding claims, comprising a plurality of associated conversion means (112, 212) and pumping or compression means (116, 216) distributed in different geographical sites, on the one hand, and remote conversion means (121, 122, 221, 222, 226) on the other hand, including a turbine (121, 221, 226) capable of being driven into rotation by circulating fluid from the different pumping or compression means (116, 216) and an alternator (122, 222) capable of converting the rotation of the turbine into electric energy.

13. The device according to claim 12, further comprising a manifold capable of selectively connecting or disconnecting each of the conversion (112, 212) and pumping or compression (116, 216) means with the remote conversion means (121, 122, 221, 222, 226) in order to regulate the amount of fluid received by the remote conversion means.

14. The device according to any of the preceding claims, comprising means (138) for ventilating the pumping or compression means (116, 216).

15. The device according to any of the preceding claims, wherein the first conversion means (112, 212) comprise a propeller, the device comprising:
- remote conversion means (121, 122, 221, 222, 226) including a generator turbine (121, 221, 226) capable of being driven into rotation by the circulating fluid and an alternator (122, 222) capable of converting the rotation of the turbine into electric energy,
- means for adjusting the orientation of the blades of the propeller (112) driving the pumping means (116, 216), and/or
- means for adjusting the needle of a supply nozzle of the generator turbine (121, 221, 226) or means for adjusting the orientation of the blades of the generator turbine (121, 221, 226),
the adjustment means being controlled in order to regulate flow rate and pressure of the fluid feeding the generator turbine (121, 221, 226) so that the alternator (122, 222) generates an electric current with quasi-constant frequency.
